# FASCICULE DE BREVET EUROPEEN

(11) **EP 0 636 465 B1**
(45) Date de publication et mention de la délivrance du brevet: **04.06.1997**
(21) Numéro de dépôt: 94490032.3
(22) Date de dépôt: 25.07.1994
(51) Int. Cl.: B29C 45/16, B29C 45/17, B29L 31/46

(54) **Procédé de fabrication par moulage d'une pièce comportant une zone creuse**
Verfahren zum Herstellen durch Giessen eines Gegenstandes mit einem hohlen Bereich
Method for producing by moulding an object with a hollow area

(30) Priorité: 28.07.1993 FR 9309514
(43) Date de publication de la demande: 01.02.1995
(73) Titulaire: REYDEL, 59147 Gondecourt (FR)
(72) Inventeur: Le Lannou, Michel, F-59147 Gondecourt (FR); Duriez, Dominique, F-59147 Gondecourt (FR)
(74) Mandataire: Duthoit, Michel

(56) Documents cités:
- EP-A- 0 524 333
- FR-A- 1 299 327
- FR-A- 2 160 245
- FR-E- 62 046
- US-A- 4 743 481
- PATENT ABSTRACTS OF JAPAN vol. 14, no. 323 (M-997) (4266) 11 Juillet 1990 & JP-A-02 108 511 (TOYODA GOSEI)
- PATENT ABSTRACTS OF JAPAN vol. 16, no. 115 (M-1224) (5158) 23 Mars 1992 & JP-A-03 284 915 (MITSUBISHI GAS CHEM. CO. INC.)

## Description

La présente invention a pour objet un procédé de fabrication par moulage d'une pièce comportant une zone sensiblement cylindrique, se présentant sous la forme d'un insert réalisé dans un premier matériau thermoplastique recouvert au moins partiellement par une couche d'un second matériau thermoplastique de recouvrement, et une application de ce procédé à la fabrication de poignée intérieure de véhicule automobile.

Bien qu'ayant été développée plus spécialement pour réaliser des pièces dans le domaine automobile, il est néanmoins à noter que la présente invention pourra s appliquer à tous les secteurs de l'activité économique dans lesquels on doit réaliser de telles pièces qui doivent en outre, présenter des propriétés de résistance et de légèreté.

Actuellement, pour fabriquer des poignées notamment de véhicules, on a recours à des techniques classiques de plasturgie.

On connaît ainsi, du document FR-2.102.428, un procédé selon lequel on réalise un insert en un matériau plastique ou métallique que l'on recouvre extérieurement au moins partiellement par une peau d'un matériau plastique et qui délimite avec celui-ci un logement à l'intérieur duquel on injecte une mousse de polyuréthane.

Or, de tels inserts présentent, de par leur structure, un poids qui n'est pas toujours compatible avec de telles applications, notamment, dans le cas où l'on doit fabriquer des poignées légères.

Par ailleurs, ces techniques de fabrication sont complexes et ne permettent pas d'obtenir des poignées qui peuvent être recyclées totalement de sorte que l'on doit prévoir un traitement spécifiques de celles-ci lorsque cela est nécessaire.

On connaît également, du document FR-2.160.245, un procédé de moulage de pièces comportant une cavité interne se présentant sous la forme d'un insert réalisé dans un premier matériau thermoplastique recouvert au moins partiellement par une couche d'un second matériau thermoplastique de recouvrement, dans lequel on prévoit une contrepression dans ladite cavité interne pendant la phase de mise en place du matériau de recouvrement.

De plus, la contrepression est exercée par un liquide et le premier matériau n'est plus malléable lors de la mise en place du matériau de recouvrement.

Le document US-4.743.481 décrit un procédé dans lequel on exerce également une contrepression grâce à un fluide introduit dans une préforme, restant par la suite dans la pièce produite.

Toutefois, ce document concerne la fabrication de conduits présentant une structure tubulaire ouverte.

La présente invention a pour but de remédier à ces inconvénients en proposant un procédé de fabrication d'une pièce, destinée notamment à réaliser une poignée de véhicule, qui présente des propriétés satisfaisantes de légèreté et de résistance mécanique notamment aux contraintes externes.

Un autre but du procédé de fabrication de pièces conforme à l'invention réside dans le fait qu'il permet de réaliser en série, selon des cadences élevées de ces pièces, ce qui en diminue le coût de fabrication.

Un autre but du procédé de fabrication de pièces conforme à l'invention réside dans le fait qu'il permet de réaliser des pièces sans défaut répondant aux normes et aux exigences imposées dans le domaine de l'automobile.

Un autre but du procédé de fabrication de pièces conforme à l'invention réside dans le fait qu'il permet de réaliser des pièces avec plusieurs matériaux d'une même famille chimique, ce qui leur permettent d'être recyclées totalement lorsque cela est nécessaire.

A cette fin, le procédé de fabrication par moulage de pièces comportant une cavité interne, se présentant sous la forme d'un insert réalisé dans un premier matériau thermoplastique recouvert au moins partiellement par une couche d'un second matériau thermoplastique de recouvrement, dans lequel l'on prévoit une contrepression dans la cavité interne pendant la phase de mise en place du matériau de recouvrement, est caractérisé par le fait que :
- on utilise un premier matériau thermoplastique présentant des propriétés de résistance aux contraintes mécaniques,
- on injecte dans ledit premier matériau au moins une bulle de gaz sous pression en vue de délimiter une cavité interne creuse,
- on prévoit une contrepression exercée par injection d'un gaz sous pression, l'insert étant encore malléable pendant la phase de mise en place du matériau de recouvrement.

Plus précisément, selon l'invention :
- on introduit ledit premier matériau dans une première enceinte,
- on injecte dans ledit premier matériau le gaz sous pression en vue de délimiter ladite cavité interne,
- on dispose l'insert dans une seconde empreinte, et on injecte, après figement partiel dudit premier matériau, le gaz sous pression dans ladite cavité et on recouvre au moins partiellement ledit premier matériau par une couche d'un matériau de recouvrement,
- on refroidit l'ensemble et on libère la pièce formée du moule.

D'autres buts et avantages de la présente invention apparaîtront au cours de la description qui va suivre qui n'est donnée qu'à titre indicatif et qui n'a pas pour but de la limiter.

La figure 1 est une vue de dessus qui illustre schématiquement un moule destiné à fabriquer une pièce selon le procédé conforme à l'invention.

La figure 2 est une vue schématique qui illustre la phase pendant laquelle on injecte une bulle de gaz dans le dit premier matériau dans une première enceinte.

La figure 3 est une vue schématique qui illustre la phase pendant laquelle on injecte un gaz sous pression à l'intérieur d'une cavité creuse dans le dit premier matériau constituant l'insert dans une seconde empreinte.

La figure 4 est une vue schématique en coupe longitudinale d'une poignée de portière de véhicule fabriquée par un procédé conforme à l'invention.

La figure 5 est une vue en coupe selon la ligne V-V de la figure 4 qui illustre la structure cylindrique de la poignée.

L'invention vise un procédé de fabrication d'une pièce, comportant une zone sensiblement cylindrique, constitué par un insert réalisé dans un premier matériau thermoplastique recouvert au moins partiellement par une couche d'un second matériau thermoplastique de recouvrement, tel qu'une poignée de porte de véhicule ainsi qu'une poignée de porte obtenue par ce procédé.

Bien qu'ayant fait l'objet d'un développement dans le cadre d'une application particulière de fabrication de poignées de portes destinées à des véhicules automobiles, la présente invention s'appliquera à la fabrication de tout type de pièces ou d'objets qui doivent présenter des propriétés de légèreté et de résistance mécanique aux contraintes.

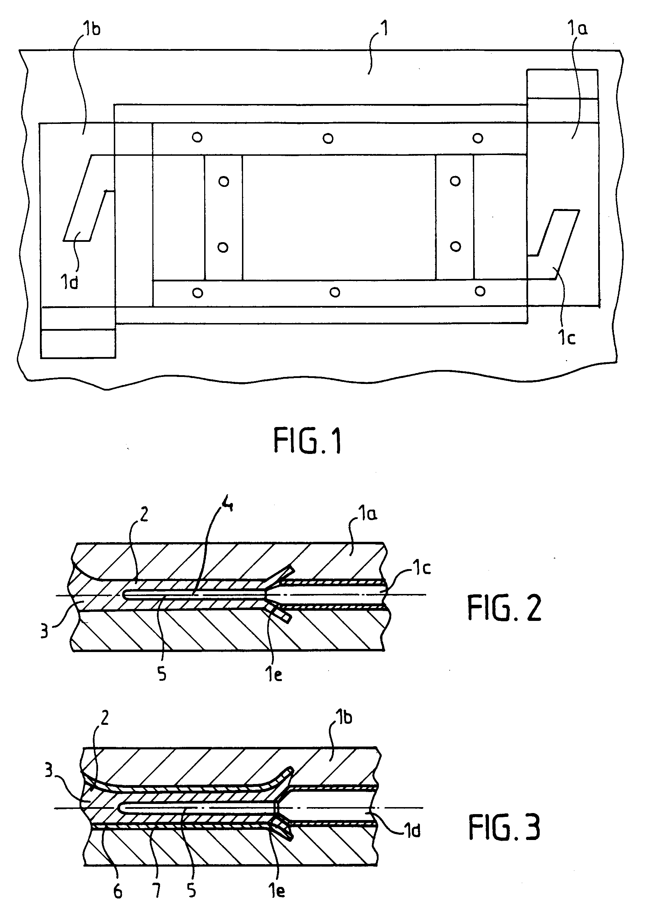

La figure 1 illustre un moule 1 destiné à coopérer avec un contre-moule d'un type classique et connu qui comporte deux empreintes 1a, 1b, ayant des formes adaptées en fonction des pièces que l'on désire fabriquer. Chaque empreinte 1a, 1b du moule 1 est équipée d'une buse d'injection 1c, 1d, d'un gaz sous pression relié par des canalisations non représentées à une réserve du dit gaz et dont la distribution est commandée et régulée par des moyens d'un type classique et connu.

Dans la forme de réalisation illustrée, ce moule 1 est notamment prévu pour permettre un déplacement par rotation ou par translation de la pièce de l'une des empreintes la vers l'empreinte 1b qui présente, en outre, une dimension légèrement supérieure afin de recevoir un insert déjà moulé.

Des moyens d'étanchéïté le des buses 1c, 1d avec la pièce à réaliser sont prévus pour éviter une introduction non désirée des gaz susceptibles de générer une déformation non voulue de la pièce.

La figure 2 illustre l'étape du procédé de fabrication conforme à l'invention dans lequel on introduit un premier matériau thermoplastique 2 chauffé à l'intérieur de la première empreinte 1a du moule 1 en vue de confectionner un insert 3 puis pendant laquelle on injecte, dans le dit premier matériau 2 au moins une bulle 4 d'un gaz sous pression pour délimiter une cavité creuse intérieure constituant un logement creux 5. Cette étape s'effectue lorsque le premier matériau 2 est encore chaud et maléable et la durée d'introduction de cette bulle est bien entendu, ajustée en fonction des caractéristiques propres du matériau utilisé de manière à obtenir une déformation adaptée de celui-ci.

En ce qui concerne le premier matériau 2, il peut par exemple s'agir de matières polyoléfines telles que du polypropylène thermoplastique ou tout autre matière thermoplastique apte à permettre la fabrication d'un insert en présentant notamment des propriétés de résistance aux contraintes mécaniques satisfaisantes.

Il est également à noter que le matériau 2 pourrait être constitué par un mélange de polyoléfine ou de tout autre matière plastique (polyamide, ABS, polycarbonate, etc...) qui présente des propriétés adaptées et, celui-ci pourrait éventuellement contenir des éléments de renforcement tels que des fibres de verre, de la mousse de polyuréthane ou des inclusions diverses.

A titre d'exemple, l'introduction du premier matériau 2 s'effectue lorsque celui-ci est porté à une température d'environ 180 °C, pendant une durée de quelques secondes et, l'injection de la bulle de gaz sous pression tel que de l'azote est réalisée quelques secondes après la fin de cette injection.

Après une période de refroidissement comprise par exemple entre 10 et 60 sec pendant laquelle la température du premier matériau 2 descend dans une plage thermique comprise entre 50 et 150 °C, on place l'insert 3 dans la seconde empreinte 1b et l'on injecte, comme plus particulièrement illustré à la figure 3, un gaz sous pression dans le logement 5 puis on introduit un second matériau chauffé 6 constituant un matériau de recouvrement qui enveloppe au moins partiellement le premier matériau 2 de l'insert 3 en vue de constituer une "peau" 7.

En ce qui concerne ce second matériau 6, il peut également par exemple s'agir de matières polyoléfines thermoplastiques telles que du polypropylène thermoplastique tel que par exemple du santoprène, du néoprène, du polychlorure de vinyl, du polyuréthane, des polyoléfines, ou tout autre matériau thermoplastique pouvant être injecté afin de constituer une "peau" 7.

En fonction des besoins, le matériau 2 et le matériau 6 peuvent être identiques ou de nature différente mais, ils seront d'une même famille chimique pour faciliter le recyclage de manière à éviter la production de déchets dont le traitement ultérieur nécessaire poserait des problèmes.

Il est à noter que selon l'invention, on obtient de bons résultats grâce à la mise en oeuvre d'un moule rotatif d'un type classique et connu de l'homme de l'art, qui permet en outre, d'accroître les cadences de production et donc de réduire le coût de fabrication de ces poignées de porte.

Par ailleurs, les techniques mises en oeuvre par ce procédé permettent de fabriquer des pièces qui répondent aux exigences de qualité et de normes imposées notamment dans le secteur de l'automobile, par un contrôle et une régulation adaptés des différentes étapes de ce procédé de fabrication conforme à l'invention.

Plus précisément, l'on obtient de bons résultats grâce à une production "simultanée", d'un insert 3 par un premier matériau 2 à l'intérieur de la première enceinte 1a, et une injection de la "peau" 7 constituée par le second matériau 6 de recouvrement sur l'insert 3 disposé dans la seconde empreinte 1b.

En effet, on a notamment un meilleur accrochage entre la couche 2 de premier matériau et de second matériau 6 puisque ce surmoulage s'effectue lorsque la couche de second matériau 6, destinée à constituer la "peau", vient recouvrir au moins partiellement la couche de matériau 2 lorsque celle-ci est encore maléable et chaude.

En fonction des besoins et notamment du caractère esthétique que doivent présenter ces pièces, on pourra utiliser un second matériau 6, destiné à réaliser une telle "peau" 7 constituée par exemple par un copolymère séquencé du tue styrène - éthylène/buthylène - styrène "SEBS" qui peut également contenir des agents gonflants du type diazocarbonanides exothermiques, ou bicarbonate citrate endo-thermique. Le pourcentage de ces différents agents est bien entendu variable en fonction du résultat recherché et à titre d'exemple, l'introduction d'un pourcentage en poids comprise entre 0,05 et 23 % d'agents gonflants permet d'obtenir un aspect de la peau plus ou moins souple.

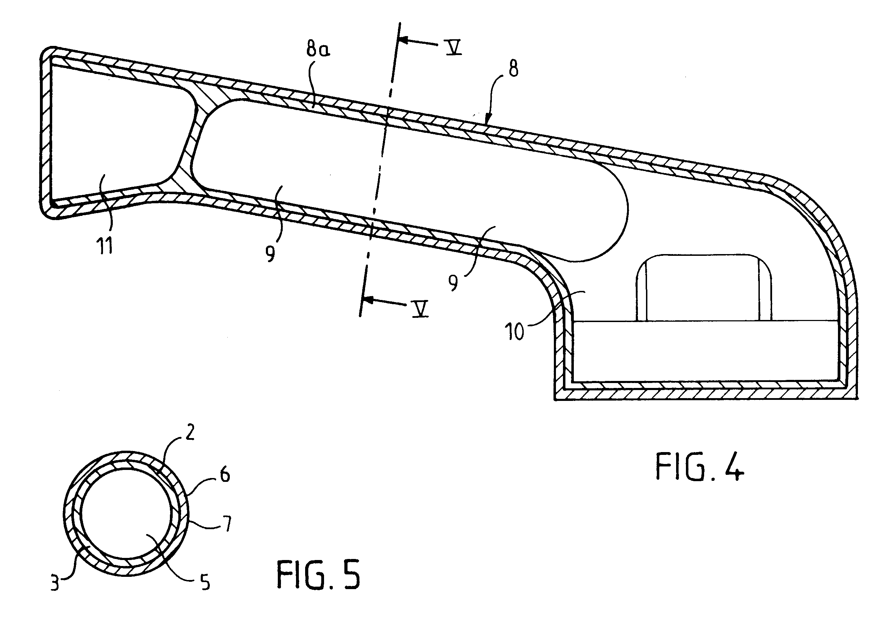

L'invention a également pour objet l'application de ce procédé à la fabrication d'une poignée de porte de véhicule 8 telle que celle qui est plus particulièrement illustrée à la figure 4.

Cette poignée de porte 8 comporte un corps 8a qui présente une zone 9 sensiblement cylindrique qui se prolonge à l'une de ses extrémités par un recourbement 10 faisant saillie sensiblement perpendiculairement et, à l'autre de ses extrémités, par un prolongement 11 sensiblement tronconique.

Ces deux extrémités sont destinées à coopérer avec le corps d'une portière en étant solidarisées à celle-ci par tout moyen approprié.

En ce qui concerne la zone 9, sa structure est plus particulièrement illustrée à la figure 5 et, notamment, elle présente une cavité interne creuse délimiant un logement 5 obtenu par le procédé de fabrication conforme à l'invention.

Il est notamment à remarquer que grâce à ce procédé, l'on obtient une mise en place et un positionnement et un dimensionnement réguliers des couches de premier matériau 2 et de second matériau 6 ainsi qu'un logement 5 de forme adaptée qui conférent à l'ensemble de la poignée à la fois une légèreté mais également une résistance mécanique aux contraintes mécaniques appropriées.

Bien entendu, l'invention ne se limite pas à la seule forme de réalisation qui a été décrite ci-dessus mais, au contraire, elle en embrasse toutes les variantes de réalisation avec différents matériaux de base.

## Revendications

1. Procédé de fabrication par moulage de pièces, comportant une cavité interne (4) se présentant sous la forme d'un insert (3) réalisé dans un premier matériau thermoplastique (2) recouvert au moins partiellement par une couche d'un second matériau plastique (6) de recouvrement, dans lequel l'on prévoit une compression dans la cavité interne (5) pendant la phase de mise en place du matériau de recouvrement, caractérisé par le fait que :
- on utilise un premier matériau thermoplastique (2) présentant des propriétés de résistance aux contraintes mécaniques,
- on injecte dans ledit premier matériau (2) au moins une bulle (4) de gaz sous pression en vue de délimiter une cavité interne creuse (5),
- on prévoit une contrepression exercée par injection d'un gaz sous pression, l'insert (3) étant encore malléable pendant la phase de mise en place du matériau de recouvrement.

2. Procédé de fabrication par moulage d'une pièce selon la revendication 1, caractérisé en ce que :
- on introduit ledit premier matériau (2) dans une première empreinte (1a),
- on injecte dans ledit premier matériau (2) le gaz sous pression en vue de délimiter ladite cavité interne (5),
- on dispose l'insert (3) dans une seconde empreinte (1b) et on injecte, après figement partiel dudit premier matériau, le gaz sous pression dans ladite cavité (5) et on recouvre, au moins partiellement, ledit premier matériau par une couche d'un matériau de recouvrement (6),
- on refroidit l'ensemble et/on libère la pièce formée du moule.

3. Procédé de fabrication par moulage d'une pièce selon la revendication 1, caractérisé en ce que l'on utilise des matériaux (2, 6) d'une même famille chimique pour faciliter le recyclage.

4. Procédé de fabrication par moulage d'une pièce selon la revendication 1, caractérisé en ce que l'on utilise un matériau de recouvrement (6) qui comporte des adjuvants tels que des agents gonflants.

5. Procédé de fabrication par moulage d'une pièce selon la revendication 2, caractérisé en ce que l'on prévoit une production d'un insert (3) par un premier matériau (2) à l'intérieur de la première enceinte (1a) suivie par une injection du second matériau (6), destiné à constituer la « peau » (7) de recouvrement de l'insert (3) disposé dans la seconde empreinte (1b).

6. Procédé de fabrication selon la revendication 1, caractérisé en ce que l'on utilise un premier matériau (2) constitué par une matière polyoléfine.

7. Procédé de fabrication selon la revendication 1, caractérisé en ce que l'on utilise un second matériau (6) constitué par une matière polyoléfine thermoplastique.

8. Application du procédé de fabrication d'une pièce selon la revendication 1 à la fabrication de poignées (8), notamment de portières de véhicules.

## Claims

1. Process for manufacturing parts by moulding, the said parts comprising an inner cavity (5) taking the form of a insert (3) produced in a first thermoplastic material (2) covered at least partially by a layer of a second, covering plastic material (6), in which compression is provided in the internal cavity (5) during the covering material placing stage, characterized by the fact that :
- use is made of a first thermoplastic material (2) having mechanical stress resisting properties ;
- at least one bubble (4) of pressurized gas is injected into the said first material (2) with a view to delimiting a hollow inner cavity (5) ;
- a counter-pressure exerted through the injection of a pressurized gas is provided, the insert (3) being still malleable during the covering material placing stage.

2. Process for manufacturing a part by moulding according to claim 1, characterized in that :
- the said first material (2) is introduced into a first impression (1a) ;
- the pressurized gas is injected into the said first material (2) with a view to delimiting the said inner cavity (5) ;
- the insert (3) is placed in a second impression (1b) and, after the said first material has partially congealed, the pressurized gas is injected into the said cavity (5) and the said first material is covered, at least partially, by a layer of covering material (6) ;
- the whole is cooled down and the formed part is released from the mould.

3. Process for manufacturing a part by moulding according to claim 1, characterized in that use is made of materials (2, 6) of the same chemical family to facilite recycling.

4. Process for manufacturing a part by moulding according to claim 1, characterized in that use is made of a covering material (6) which comprises adjuvants such as inflating agents.

5. Process for manufacturing a part by moulding according to claim 2, characterized in that provision is made for producing an insert (3) with a first material (2) inside the first impression (1a) followed by injecting a second material (6) intended to form the « skin » (7) to cover the insert (3) placed in the second impression (1b).

6. Manufacturing process according to claim 1, characterized in that use is made of a first material (2) formed by a polyolefin material.

7. Manufacturing process according to claim 1, characterized in that use is made of a second material (6) formed by a thermoplastic polyolefin material.

8. Application of the part manufacturing process according to claim 1 to the manufacture of handles (8), in particular for the doors of vehicles.

## Patentansprüche

1. Verfahren zur Herstellung durch Formgießen von Teilen umfassende einen als ein Einsatz (3) aus einem ersten thermoplastischen Material ausgestalteten Innenhohlraum (4), der Wenigstens zum Teil von einer Schicht aus einem zweiten Deckkunststoff (6) überdeckt wird, bei dem während der Phase des Anbringens des Deckmaterials eine Verdichtung im Innenhohlraum (5) vorgesehen wird, dadurch gekennzeichnet, daß:
- ein erstes thermoplastisches Material verwendet wird, das mechanische Beanspruchungsfestigkeitseigenschaften aufweist,
- in das genannte erste Material (2) wenigstens eine unter Druck stehende Gasblase (4) eingespritzt wird, um einen hohlen Innenhohlraum (5) abzugrenzen,
- ein durch Einspritzen eines unter Druck stehenden Gases ausgeübter Gegendruck vorgesehen wird, wobei der Einsatz (3) während der Phase des Anbringens des Deckmaterials noch schmiedbar ist.

2. Verfahren zur Herstellung durch Formgießen eines Teils nach Anspruch 1, dadurch gekennzeichnet, daß:
- das erste Material (2) in einen ersten Formhohlraum (1a) eingeführt wird,
- in das genannte erste Material (2) das unter Druck stehende Gas eingespritzt wird, um den genannten Innenhohlraum (5) abzugrenzen,
- der Einsatz (3) in einen zweiten Formhohlraum (1b) angeordnet und nach teilweisem Steifwerden des genannten ersten Materials das unter Druck stehende Gas in den genannten Hohlraum (5) eingespritzt und das genannte erste Material wenigstens teilweise mit einer Schicht eines Deckmaterials (6) überdeckt wird,
- das Ganze abgekühlt und der geformte Teil aus der Form genommen wird.

3. Verfahren zur Herstellung durch Formgießen eines Teils nach Anspruch 1, dadurch gekennzeichnet, daß zum Erleichtern der Recycling Materialien (2, 6) einer selben chemischen Familie verwendet werden.

4. Verfahren zur Herstellung durch Formgießen eines Teils nach Anspruch 1, dadurch gekennzeichnet, daß ein Deckmaterial (6) verwendet wird, das Zusätze, wie Quellmittel, enthält.

5. Verfahren zur Herstellung durch Formgießen eines Teils nach Anspruch 2, dadurch gekennzeichnet, daß eine Erzeugung eines Einsatzes (3) aus einem ersten Material (2) innerhalb des ersten Raumes (1a), anschließend ein Einspritzen des zweiten Materials (6) zum Bilden der "Deckhaut" (7) des im zweiten Formhohlraum (1b) angeordneten Einsatzes (3) vorgesehen werden.

6. Herstellungsverfahren nach Anspruch 1, dadurch gekennzeichnet, daß ein aus einem Polyolefinstoff bestehendes erstes Material (2) verwendet wird.

7. Herstellungsverfahren nach Anspruch 1, dadurch gekennzeichnet, daß ein aus einem thermoplastischen Polyolefinstoff bestehendes zweites Material (6) verwendet wird.

8. Anwendung des Verfahren zur Herstellung eines Teils nach Anspruch 1 für die Herstellung von Griffen (8), nämlich von Fahrzeugtüren.
